# EUROPÄISCHE PATENTSCHRIFT

(11) **EP 2 225 945 B1**
(45) Veröffentlichungstag und Bekanntmachung des Hinweises auf die Patenterteilung: **17.11.2010**
(21) Anmeldenummer: 09002384.7
(22) Anmeldetag: 20.02.2009
(51) Int. Cl.: A21D 17/00, C10L 5/14, C10L 5/24, C10L 5/44

(54) **Verfahren zur Verwertung von Backwaren und Anlage dazu**
Method for recycling baked goods and processing line thereof
Procédé d'utilisation de produits cuits et installation correspondante

(43) Veröffentlichungstag der Anmeldung: 08.09.2010
(73) Patentinhaber: Mahnkopp, Christoph, 31162 Bad Salzdetfurth (DE); Mahnkopp, Elisabeth, 31162 Bad Salzdetfurth (DE); Jacobs, Ulrich, 23743 Grömitz (DE); Weiss, Sabine, 23743 Grömitz (DE)
(72) Erfinder: Mahnkopp, Christoph, 31162 Bad Salzdetfurth (DE); Mahnkopp, Elisabeth, 31162 Bad Salzdetfurth (DE); Jacobs, Ulrich, 23743 Grömitz (DE); Weiss, Sabine, 23743 Grömitz (DE)
(74) Vertreter: Vollmann, Heiko

(56) Entgegenhaltungen:
- WO-A1-2004/067686
- DE-A1- 3 422 912
- DE-A1-102005 004 634
- GB-A- 202 386
- GB-A- 2 426 004
- JP-A- 11 256 168
- JP-A- 57 180 697
- US-A- 4 236 897
- DATABASE WPI Week 199349 Thomson Scientific, London, GB; AN 1993-394071 XP002531470 & SU 1 778 154 A1 (KAMEN I SILIKATY SCI PRODN ASSOC) 30. November 1992 (1992-11-30)
- DATABASE WPI Week 198825 Thomson Scientific, London, GB; AN 1988-173747 XP002531471 & SU 1 355 215 A1 (BAKERY IND PRODN CO) 30. November 1987 (1987-11-30)
- DATABASE FSTA [Online] INTERNATIONAL FOOD INFORMATION SERVICE (IFIS), FRANkFURT-MAIN, DE; VINOGRADOVA A A ET AL: "Keeping characteristics of products from stale bread." XP002531469 Database accession no. 90-1-06-m0086

## Beschreibung

Die Erfindung betrifft ein Verfahren zur Verwertung von Backwaren sowie eine Backwarenverwertungsanlage.

Beim Verkauf von Backwaren ist regelmäßig ein breiter Querschnitt des Backwarensortiments bis zum Ende eines jeden Verkaufstages vorzuhalten, da eine ausreichende Auswahl oft Grundlage der Kaufentscheidung des Kunden ist. Dieser Umstand bringt es mit sich, dass ein beträchtlicher Teil der Backwaren bis zum Ende eines Verkaufstages nicht verkauft wird. Für einen späteren Verkauf eignen sich die Backwaren zumeist nicht, da sie - obgleich oft noch längere Zeit haftbar - nicht mehr als hinreichend frisch empfunden werden. Die Menge dieser nicht zum Verkauf geeigneten Backwaren beträgt etwa 15 bis 20 % des Produktionsumfanges. Ins Gewicht fällt dabei insbesondere Rück- bzw. Altbrot. Darüber hinaus fallen bei der Produktion regelmäßig Schnittreste, Fehlschnitte und Restchargen, beispielsweise als Restbrot, an, die nicht ohne weiteres in den Verkauf gelangen können. Aus Kostengründen wird daher häufig angestrebt, diese unverkauften bzw. unverkäuflichen Backwaren alternativ zu verwerten.

In geringem Umfang können solche Backwaren als Zutaten bei der Herstellung neuer Backwaren verwendet werden, wie es beispielsweise bei der Brotherstellung zulässig ist. Diese Verwertungsmöglichkeit ist allerdings lebensmittelrechtlich deutlich begrenzt. Alternativ werden unverkaufte bzw. unverkäufliche Backwaren häufig als Tierfutter eingesetzt. Als Futtermittel erzielen die Backwaren jedoch nur einen deutlich geringeren Erlös. Zudem können dabei nur kleine Mengen ohne weitere Behandlung der Backwaren verfüttert werden. Große Backwarenmengen hingegen müssen aus logistischen Gründen zunächst zu einem Futtermittel aufgearbeitet werden, wodurch der erzielbare Erlös zusätzlich gemindert wird. Da die Anschaffung der erforderlichen Anlagen hohe Investitionen bei nur geringer Wirtschaftlichkeit erfordert, werden - gerade bei kleinen und mittelgroßen Backbetrieben - große Teile der unverkauften Backwaren ohne weitere Verwertung über den Gewerbemüll entsorgt.

Aus SU1778154 ist die Verwendung von Altbrot als Bindemittel in der Herstellung von Brennstoffbriketts gekannt. Die Herstellung eines Granulats aus Lebensmittelabfällen wie zum Beispiel Brot, zur Verwendung als Kompost oder Brennstoff ist weiterhin aus GB 2426004 bekannt. Aus JP11256168 ist des weiteren die Verwertung von Schiffszwieback als Brennstoff bekannt.

Es ist daher Aufgabe der Erfindung, ein einfaches und kostengünstiges Verfahren zur Verwertung von Backwaren bereitzustellen. Insbesondere soll dieses Verfahren auch in einem Backbetrieb selbst durchführbar sein. Ferner ist es Aufgabe der Erfindung, eine Anlage zu schaffen, mit welchen das Verfahren ausgeführt werden kann.

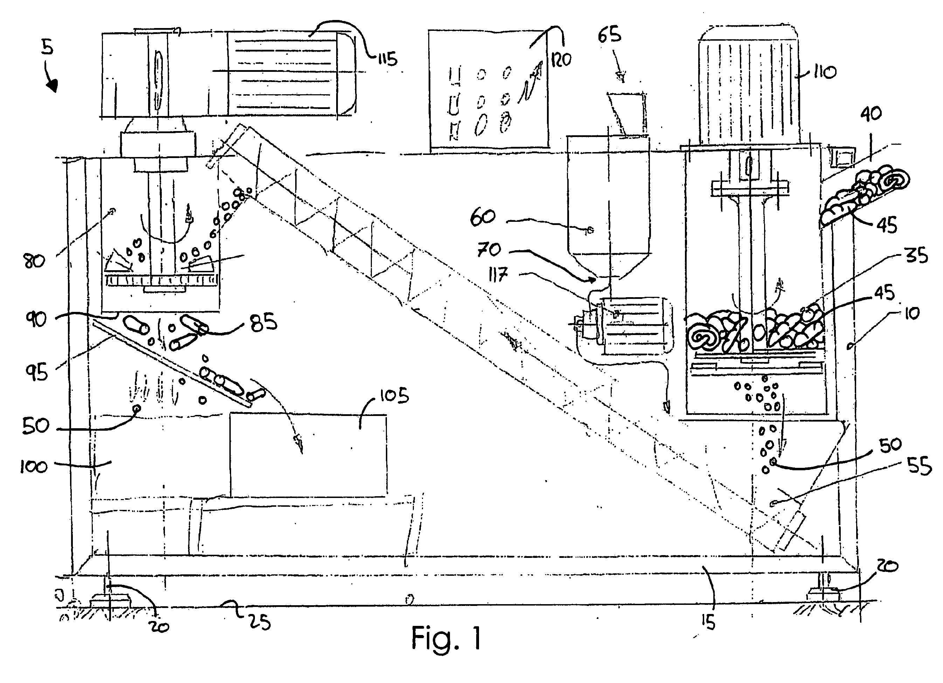

Diese Aufgabe wird durch ein Verfahren mit den im Anspruch 1 angegebenen Merkmalen sowie mit einer Backwarenverwertungsanlage mit den im Anspruch 9 angegebenen Merkmalen gelöst. Bevorzugte Ausgestaltungen sind in den jeweiligen Unteransprüchen, der nachfolgenden Beschreibung und der Zeichnung angegeben.

Bei dem erfindungsgemäßen Verfahren zur Verwertung von Backwaren als Brennstoff werden die Backwaren in einem ersten Verfahrensschritt getrocknet. Nachfolgend werden bei dem erfindungsgemäßen Verfahren die Backwaren zerkleinert und dann zu Brennstoffformlingen agglomeriert. Die getrockneten Backwaren können nach dem ersten Verfahrensschritt ohne weiteres für eine längere Zeit zwischengelagert werden.

Beispielsweise können die weiteren Verfahrensschritte täglich, chargenweise oder auch nach längeren Zeitabständen durchgeführt werden. Ferner erleichtert die Trocknung zum einen das nachfolgende Zerkleinern der Backwaren. Zum anderen sind durch die Trocknung die mit dem Verfahren hergestellten Brennstoffformlinge leicht verbrennbar.

Mit diesem Verfahren können Backwaren besonders einfach und wirtschaftlich als Brennstoff verwertet werden. So lassen sich die Brennstoffformlinge entweder verkaufen oder aber im Backbetrieb selbst, vorzugsweise zu Heizzwecken, verbrennen. Insbesondere können auch sämtliche Verfahrensschritte zur Herstellung der Brennstoffformlinge kostengünstig vor Ort in einem Backbetrieb durchgeführt werden. Ein besonderer logistischer Aufwand fällt dabei nicht notwendigerweise an.

Werden die Brennstoffformlinge zudem im Backbetrieb selbst verbrannt, lassen sich anstelle der Erzielung eines Verkaufserlöses für die Brennstoffformlinge die ansonsten erforderlichen Ausgaben für Primärenergie deutlich reduzieren. Die Brennstoffformlinge können dazu in Struktur, Form und Festigkeit ähnlich üblichen Holzbrennstoffformlingen wie beispielsweise Holzpellets oder -briketts hergestellt werden. Sowohl beim Verkauf als auch bei der Verbrennung der Brennstoffformlinge entfällt die sonst häufig erforderliche kostenträchtige Entsorgung der Backwaren im Gewerbemüll.

Ferner bietet dieses Verfahren auch unter Umweltgesichtspunkten erhebliche Vorzüge. Bei den gemäß dem Verfahren hergestellten Brennstoffformlingen handelt es sich um einen CO₂-neutral verbrennenden Biobrennstoff, welcher die Ökobilanz im Vergleich zu den sonst erforderlichen Primärenergien regelmäßig deutlich verbessert.

Bevorzugt wird bei dem Verfahren Altbrot als Backwaren verwendet. Ebenfalls bevorzugt handelt es sich bei den Backwaren um Restbrot. So bilden insbesondere Alt- bzw. Rückbrot einen beträchtlichen Anteil der unverkauften bzw. unverkäuflichen Backwaren, dessen Verwertung durch das erfindungsgemäße Verfahren kostengünstig ermöglicht ist.

Bei dem Verfahren werden die Backwaren vorzugsweise durch die Wärme, insbesondere die nach dem Backen vorhandene Restwärme, eines Backofens getrocknet. Auf diese Weise sind zur Trocknung der Backwaren keine zusätzlichen Gerätschaften erforderlich, sondern es kann auf die ohnehin in Backbetrieben vorhandene Ausstattung zurückgegriffen werden. Wird dazu vorteilhaft die nach dem Backen vorhandene Restwärme des Backofens genutzt, so erfolgt die Trocknung der Backwaren zudem ohne zusätzlichen Einsatz von Energie. Beispielsweise können die abends (bzw. am Ende einer Schicht) in einem Bäckereibetrieb zurückbehaltenen bzw. an einen Backbetrieb zurückgelieferten Backwaren in einen oder mehrere Backöfen gelegt werden. Am nächsten Arbeitstag (bzw. zu Beginn der nächsten Schicht) lassen sich dann die Backwaren vor dem nächsten Backvorgang im getrockneten Zustand aus dem Backofen entnehmen, sodass im Anschluss bzw. nach längeren Zeitabschnitten die weiteren Verfahrensschritte durchgeführt werden können.

Vorteilhaft werden die Backwaren bei dem Verfahren durch Mahlen zerkleinert. Somit kann zum einen der Platzbedarf der zerkleinerten Backwaren, insbesondere bei Alt- oder Restbrot, besonders klein gehalten werden. Zum anderen kann die anschließende Agglomeration der gemahlenen Backwaren durch etablierte Verfahren erfolgen. Beispielsweise eigenen sich die gemahlenen Backwaren besonders zum Pressen in eine vorgesehene Form.

Bei dem Verfahren wird den zerkleinerten Backwaren vorteilhafterweise vor der Agglomeration zu Brennstoffformlingen Bindemittel zugesetzt. Besonders bevorzugt handelt es sich bei dem Bindemittel um solche Bindemittel, welche gewöhnlich ohnehin in Bäckereibetrieben vorhanden sind.

Insbesondere wird Bindemittel in Form von Zuckerlösung und/oder Glukose verwendet. Diese Ressourcen sind in Bäckereibetrieben nahezu umfassend verbreitet und äußerst kostengünstig. Besonders vorteilhaft werden zuckerhaltige Backwaren als Bindemittel verwendet. In einer solchen Ausgestaltung des Verfahrens wird also bereits ein Teil der zu verwertenden Backwaren als Bindemittel genutzt, sodass der Einsatz zusätzlicher Bindemittel entbehrlich ist oder gering gehalten werden kann. Idealerweise werden dazu die zuckerhaltigen Backwaren den übrigen zu verwertenden Backwaren in einem geeigneten Verhältnis zugegeben. Alternativ oder zusätzlich wird das Bindemittel zugesetzt und mit den zerkleinerten Backwaren vermischt, beispielsweise unter Verwendung einer Mischschnecke.

Bevorzugt werden die zerkleinerten Backwaren durch Hitze und/oder Druck zu Brennstoffformlingen agglomeriert. Geeigneterweise werden die zerkleinerten Backwaren dabei zu Brennstoffpellets pelletiert. Solche Brennstoffpellets lassen sich geeignet dosieren, leicht lagern und einfüllen sowie kontrolliert und nahezu vollständig verbrennen. Insbesondere lassen sich die Brennstoffpellets vergleichbar mit handelsüblichen Holzpellets handhaben. Alternativ werden die zerkleinerten Backwaren bevorzugt zu Brennstofftabletten tablettiert oder zu Brennstoffbriketts brikettiert.

Idealerweise werden bei dem Verfahren die Brennstoffformlinge verbrannt. Zumindest ein Teil der dabei frei werdenden Wärmeenergie wird dabei zur Beheizung zumindest eines Backofens genutzt. In einer solchen Weiterbildung des Verfahrens können die überschüssigen, unverkäuflichen bzw. unverkauften Backwaren im Sinne einer Kreislaufwirtschaft zum Heizen bei der Produktion frischer Backwaren weiterverwertet werden, wobei der Verbrauch an Primärenergie erheblich reduziert wird. Vorteilhafterweise lässt sich das gesamte Verfahren vollständig vor Ort in einem Bäckereibetrieb durchführen.

Die erfindungsgemäße Backwarenverwertungsanlage weist eine Backwarenverwertungsvorrichtung auf, welche eine Zerkleinerungseinrichtung, die zur Zerkleinerung von Backwaren ausgebildet ist, sowie eine Agglomerationseinrichtung, die zur Agglomeration der zerkleinerten Backwaren ausgebildet ist, umfasst. Die Backwarenverwertungsanlage umfasst ferner zumindest eine Brennvorrichtung, die zur Verbrennung der Brennstoffformlinge ausgebildet ist, wobei die Brennvorrichtung zur Beheizung zumindest eines Backofens ausgebildet ist und die Brennvorrichtung vorzugsweise Teil des Backofens ist oder mit dem zumindest einen Backofen wärmeleitend verbunden und/oder wärmeleitend verbindbar ausgebildet ist. Eine solche wärmeleitende Verbindung kann beispielsweise, wie an sich bekannt, mittels Thermalöl realisiert sein.

Die Agglomerationseinrichtung ist dabei zur Formung der Brennstoffformlinge, vorzugsweise durch Hitze und/oder Druck, ausgebildet. Mit der Backwarenverwertungsvorrichtung können damit mindestens diejenigen formändernden Schritte des zuvor beschriebenen Verfahrens durchgeführt werden, welche im Zerkleinern der getrockneten Backwaren und in der Agglomeration der zerkleinerten Backwaren bestehen.

In einer Weiterbildung der Erfindung ist bei der Backwarenverwertungsvorrichtung zusätzlich eine Trockenvorrichtung vorgesehen, die zum Trocknen der Backwaren vor der Zerkleinerung vorgesehen ist.

In einer bevorzugten Ausgestaltung weist die Backwarenverwertungsvorrichtung eine Backwarenaufnahme auf, die zur Aufnahme der getrockneten Backwaren ausgebildet ist. Zudem sind bei der Backwarenverwertungsvorrichtung Zuführungsmittel vorgesehen, mit welchen die Backwaren von der Backwarenaufnahme zur Zerkleinerungseinrichtung zuführbar sind. Zweckmäßigerweise ist bei der Backwarenverwertungsvorrichtung die Zerkleinerungseinrichtung eine Mahleinrichtung.

Vorzugsweise ist bei der Backwarenverwertungsvorrichtung eine Überführungseinrichtung vorgesehen, mittels welcher die zerkleinerten Backwaren von der Zerkleinerungseinrichtung zur Agglomerationseinrichtung überführbar sind. Beispielsweise kann diese Überführungseinrichtung eine Förderschnecke, ein Förderband oder eine Rieseleinrichtung sein.

In einer bevorzugten Ausgestaltung der Backwarenverwertungsvorrichtung sind Mittel vorgesehen, die zum Zusetzen von Bindemitteln zu den zerkleinerten Backwaren ausgebildet sind. Geeigneterweise weist die Backwarenverwertungsvorrichtung dabei eine Mischeinrichtung auf, die zum Zusetzen von Bindemittel zu den zerkleinerten Backwaren ausgebildet ist. Alternativ oder zusätzlich weist die Backwarenverwertungseinrichtung eine Dosiereinrichtung auf. Beispielsweise kann es sich bei der Mischeinrichtung um eine Überführungseinrichtung wie oben beschrieben handeln, die als Mischschnecke ausgebildet ist. Innerhalb oder an der Überführungseinrichtung sind beispielsweise Düsen als Dosiereinrichtung angeordnet, die das Bindemittel aus einem Tank einsprühen.

Besonders vorteilhaft ist bei der Backwarenverwertungsvorrichtung die Agglomerationseinrichtung einer Pelletiereinrichtung. In alternativen bevorzugten Ausgestaltungen handelt es sich bei der Agglomerationseinrichtung um eine Tablettiereinrichtung oder um eine Brikettiereinrichtung.

Ferner bevorzugt weist die Backwarenverwertungseinrichtung eine Ausgabe auf, die zur Ausgabe der Brennstoffformlinge ausgebildet ist. Dabei besitzt die Backwarenverwertungsvorrichtung vorteilhafterweise Zuführungsmittel, mit welchen die Brennstoffformlinge der Ausgabe zuführbar sind. Idealerweise sind zudem eine Backwarenaufnahme zur Aufnahme der getrockneten Backwaren sowie die Überführungseinrichtung zur Überführung der zerkleinerten Backwaren von der Zerkleinerungseinrichtung zur Agglomerationseinrichtung vorgesehen. In einer solchen Backwarenverwertungsvorrichtung kann das Zerkleinern der Backwaren sowie die Agglomeration der zerkleinerten Backwaren zu Brennstoffformlingen nahezu vollautomatisch erfolgen. Vorteilhaft sind dazu lediglich die getrockneten Backwaren in die Backwarenaufnahme einzulegen, wobei die aus den getrockneten Backwaren hergestellten Brennstoffformlinge nachfolgend aus der Ausgabe entnehmbar sind.

Vorzugsweise ist die Backwarenverwertungsvorrichtung gekapselt. Die Kapselung ist dabei derart dicht ausgebildet, dass keine Partikel der zerkleinerten Backwaren durch die Kapselung aus der Backwarenverwertungsvorrichtung nach außen treten können. Insbesondere bei Backwarenverwertungsvorrichtungen, bei denen die Zerkleinerung der getrockneten Backwaren durch Mahlen geschieht, ist die Kapselung daher mehl- bzw. staubdicht ausgeführt. Somit bildet diese Kapselung einen Staubschutz, durch welchen Staub die Backwarenverwertungsvorrichtung nicht verlassen kann. Vorteilhaft wird damit ein hygienischer Betrieb der Backwarenvorrichtung insbesondere in einem Bäckereibetrieb ermöglicht. Ferner wird so einer Explosionsgefahr durch Entzünden von Stäuben vorgebeugt.

Bevorzugt weist die Backwarenverwertungsvorrichtung zumindest einen Motor auf, der zum Antrieb der Zerkleinerungs- bzw. Agglomerationseinrichtung ausgebildet ist. Dabei ist der Motor zweckmäßigerweise oberhalb der Zerkleinerungs- bzw. Agglomerationseinrichtung angeordnet. Auf diese Weise kann der gegebenenfalls bei der Zerkleinerung bzw. Agglomeration entstehende Staub aus Partikeln getrockneter Backwaren einerseits den Motor nicht verschmutzen. Andererseits führt ein gegebenenfalls vorhandener Motorlüfter nicht zur Verwirbelung der zerkleinerten Backwaren.

Bei einer gekapselten Backwarenverwertungsvorrichtung ist der Motor bevorzugt oberhalb der Zerkleinerungs- bzw. Agglomerationseinrichtung und alternativ oder zusätzlich außerhalb der Kapselung angeordnet.

Geeignet weist die Backwarenverwertungsvorrichtung eine Steuereinrichtung auf, welche die Zerkleinerungseinrichtung und die Agglomerationseinrichtung geeignet steuert, etwa dahingehend, dass der Energiebedarf minimiert oder der Backwarendurchsatz optimiert wird. Ferner bevorzugt ist die Steuereinrichtung zur Steuerung von gegebenenfalls vorhandenen Überführungsmitteln bzw. Zuführmitteln sowie der Misch- und/oder Dosiereinrichtung wie oben beschrieben ausgebildet.

Nachfolgend ist die Erfindung anhand eines in der Zeichnung dargestellten Ausführungsbeispiels näher erläutert. Die Zeichnungsfigur zeigt eine Backwarenverwertungsvorrichtung einer erfindungsgemäßen Backwarenverwertungsanlage zur Durchführung des Verfahrens zur Backwarenverwertung gemäß der Erfindung schematisch im Schnitt.

Die in der Figur dargestellte Backwarenverwertungsvorrichtung 5 umfasst ein quaderförmiges Gehäuse 10, welches einen Boden 15 mit Stellfüßen 20 aufweist, mittels denen die Backwarenverwertungsvorrichtung Nachfolgend ist die Erfindung anhand eines in der Zeichnung dargestellten Ausführungsbeispiels näher erläutert. Die Zeichnungsfigur zeigt eine Backwarenverwertungsvorrichtung einer erfindungsgemäßen Backwarenverwertungsanlage zur Durchführung des Verfahrens zur Backwarenverwertung gemäß der Erfindung schematisch im Schnitt.

Die in der Figur dargestellte Backwarenverwertungsvorrichtung 5 umfasst ein quaderförmiges Gehäuse 10, welches einen Boden 15 mit Stellfüßen 20 aufweist, mittels denen die Backwarenverwertungsvorrichtung 5 auf einer Stellfläche 25 aufgestellt werden kann. Im Folgenden wird die senkrecht von der Seite des Gehäuses 10 aus auf die Stellfläche 25 weisende Richtung als nach "unten" und deren entgegengesetzte Richtung als nach "oben" weisend bezeichnet.

Das Gehäuse 10 umfasst einen quaderförmigen Edelstahlrahmen 30 sowie eine staubdichte Kapselung (in der Zeichnung nicht dargestellt). Im Inneren des Gehäuses 10 ist an dessen oberer Wandung eine Mahleinrichtung in Form einer Mühle 35 angeordnet. Die Mühle 35 weist eine Backwarenaufnahme in Form eines durch eine Wand des Gehäuses 10 geführten Schachts 40 auf. In diese Backwarenaufnahme 40 können die zuvor in einem ersten Verfahrensschritt getrockneten Backwaren 45 eingelegt werden. Die Backwaren 45 gelangen durch diesen Schacht in die Mühle 35. In der Mühle werden die Backwaren zerkleinert, indem sie zu einem feinen, mehlartigen Granulat 50 gemahlen werden. An einer unteren Seite weist die Mühle eine Öffnung auf, durch welche das Granulat 50 herabrieseln kann. Das Granulat 50 fällt in eine Mischschnecke 55, dessen eines Ende unterhalb der Mühle 35 am Boden 15 des Gehäuses 10 der Backwarenverwertungsvorrichtung 5 gelegen ist.

Die Mischschnecke 55 erstreckt sich in Förderrichtung bis zur Oberseite des Gehäuses 10 der Backwarenverwertungsvorrichtung 5. In Förderrichtung der Mischschnecke 55 von der Mühle gelegen befindet sich an der Oberseite des Gehäuses 10 und oberhalb der Mischschnecke 55 ein Dosiertank 60. Der Tank weist einen Einfüllstutzen 65 auf, welcher an der oberen Wandung des Gehäuses 10 durch die Kapselung des Gehäuses 10 nach außen geführt und nach oben geöffnet ist. Über den Einfüllstutzen 65 kann der Dosiertank 60 mit Zuckerlösung als Bindemittel befüllt werden. An seiner unteren Seite weist der Dosiertank 60 eine Dosieröffnung in Form einer Düse 70 auf, durch welche die Zuckerlösung in die Mischschnecke 55 eingesprüht wird. Auf diese Weise wird die Zuckerlösung dem Granulat 50 zugesetzt und über die Mischschnecke 55 vermischt. Alternativ können Dosiertank 60 und Düse 70 auch zur Speicherung bzw. zum Einsprühen von Glukose als Bindemittel ausgebildet sein. Alternativ zur Zugabe des Bindemittels in die Mischschnecke 55 kann auch eine zusätzliche Mischeinrichtung (in der Zeichnung nicht gezeigt), etwa in Form eines Mischers, vorgesehen sein, die das Bindemittel mit den zerkleinerten Backwaren 45 mischt, bevor die mit dem Bindemittel vermischten Backwaren 45 in die Mischschnecke gelangen.

In Förderrichtung endet die Mischschnecke 55 an einer Eingangsöffnung 75 eines Pelletierers 80. In dem Pelletierer 80 wird das Granulat 50 zu Brennstoffpellets 85 pelletiert. Die geformten Brennstoffpellets 85 sowie nicht zu Brennstoffpellets 85 pelletiertes Granulat 50 sammelt sich in einer unteren Seite des Pelletierers 80. Der Pelletierer ist über einen Pelletiererauslass 90 nach unten geöffnet. Durch den Pelletiererauslass 90 rieseln die Brennstoffpellets 85 und nicht zu Brennstoffpellets 85 pelletiertes Granulat 50 aus dem Pelletierer 80 nach unten.

Unterhalb des Pelletierers 80 befindet sich ein schräg abfallend angeordnetes Sieb 95, auf welches die herabrieselnden Brennstoffpellets 85 zusammen mit dem überschüssigen Granulat 50 auftreffen. Das Granulat 50 fällt durch die Öffnungen des Siebes 95 weiter abwärts, bis es in einem nach oben geöffneten Granulatbehälter 100 gesammelt wird. Die Brennstoffpellets 85 hingegen gelangen nicht durch die Öffnungen des Siebes 95, sondern rollen am Sieb 95 entlang in einen nach oben geöffneten Brennstoffpelletbehälter 105. Der Brennstoffpelletbehälter weist eine durch die Kapselung des Gehäuses 10 geführte Ausgabe in Form eines Schachts auf (in der Zeichnung nicht gezeigt), an welcher die Brennstoffpellets 85 entnommen werden können.

Sowohl die Mühle 35 als auch der Pelletierer 80 werden von jeweils einem Motor 110, 115 angetrieben, welche jeweils oberhalb der Mühle 35 bzw. des Pelletierers 80 sowie außerhalb der Kapselung angeordnet sind. Auf diese Weise sind die Motoren 110, 115 vor Verunreinigungen durch das Granulat 50 geschützt. Ferner wirbeln die Motoren 110, 115 so kein Granulat 50 innerhalb des Gehäuses 10 auf.

An der Oberseite des Gehäuses 10 weist die Backwarenverwertungsvorrichtung 5 eine Steuervorrichtung 120 auf, welche die Mühle 35, die Düsen 70, die Mischschnecke 55 sowie den Pelletierer 80 sowie deren Motoren 110, 115 und einen den Dosiertank 60 und die Düse 70 betreibenden Motor 117 geeignet steuert. Die Steuervorrichtung 120 ist dabei zur Optimierung des Backwarendurchsatzes im Verhältnis zum Energiebedarf ausgebildet.

### Bezugszeichenliste

- 5 -: Backwarenverwertungsvorrichtung
- 10 -: Gehäuse
- 15 -: Boden
- 20 -: Stellfüße
- 25 -: Stellfläche
- 30 -: Edelstahlrahmen
- 35 -: Backwarenaufnahme
- 40 -: Schacht
- 45 -: getrocknete Backwaren
- 50 -: Granulat
- 55 -: Mischschnecke
- 60 -: Dosiertank
- 65 -: Einfüllstutzen
- 70 -: Düse
- 75 -: Eingangsöffnung (Pelletierer 80)
- 80 -: Pelletierer
- 85 -: Brennstoffpellets
- 90 -: Auslass (Pelletierer 80)
- 95 -: Sieb
- 100 -: Granulatbehälter
- 105 -: Brennstoffpelletbehälter
- 110 -: Motor (Mühle 35)
- 115 -: Motor (Pelletierer 80)
- 117 -: Motor (Dosiertank 60 und Düse 70)
- 120 -: Steuerungseinheit

## Patentansprüche

1. Verfahren zur Verwertung von Backwaren (45) als Brennstoff, bei welchem die Backwaren zunächst getrocknet, nachfolgend zerkleinert und dann zu Brennstoffformlingen (85) agglomeriert werden.

2. Verfahren nach Anspruch 1, bei welchem Altbrot als Backwaren (45) verwendet wird.

3. Verfahren nach Anspruch 1 oder 2, bei welchem die Backwaren (45) durch die Wärme, insbesondere die nach dem Backen vorhandene Restwärme, eines Backofens getrocknet werden.

4. Verfahren nach Anspruch 1, 2 oder 3, bei welchem die Backwaren (45) durch Mahlen zerkleinert werden.

5. Verfahren nach einem der vorhergehenden Ansprüche, bei welchem den zerkleinerten Backwaren (50) vor der Agglomeration zu Brennstoffformlingen (85) Bindemittel zugesetzt wird.

6. Verfahren nach Anspruch 5, bei welchem Bindemittel in Form von Zuckerlösung und/oder Glukose und/oder zuckerhaltigen Backwaren verwendet wird.

7. Verfahren nach einem der vorhergehenden Ansprüche, bei welchem die zerkleinerten Backwaren (50) zu Brennstoffpellets (85) pelletiert werden.

8. Verfahren nach einem der vorhergehenden Ansprüche, bei welchem die Brennstoffformlinge (85) verbrannt werden und zumindest ein Teil der dabei freiwerdenden Wärmeenergie zur Beheizung zumindest eines Backofens genutzt wird.

9. Backwarenverwertungsanlage mit einer Backwarenverwertungsvorrichtung (5), welche eine Zerkleinerungseinrichtung (35), die zur Zerkleinerung von Backwaren (45) ausgebildet ist, sowie eine Agglomerationseinrichtung (80), die zur Agglomeration der zerkleinerten Backwaren (50) ausgebildet ist, umfasst, sowie mit zumindest einer Brennvorrichtung, die zur Verbrennung der Brennstoffformlinge (85) ausgebildet ist, wobei die Brennvorrichtung zur Beheizung zumindest eines Backofens ausgebildet ist und die Brennvorrichtung vorzugsweise Teil des Backofens ist oder mit dem zumindest einen Backofen wärmeleitend verbunden ist.

10. Backwarenverwertungsanlage nach Anspruch 9, bei welcher die Backwarenverwertungsvorrichtung (5)eine Backwarenaufnahme (40) aufweist, welche zur Aufnahme der getrockneten Backwaren (45) ausgebildet ist, und bei welcher Zuführungsmittel vorgesehen sind, mit welchen die Backwaren (45) von der Backwarenaufnahme (40) zur Zerkleinerungseinrichtung (35) zuführbar sind.

11. Backwarenverwertungsanlage nach Anspruch 9 oder 10, bei welcher die Zerkleinerungseinrichtung (35) eine Mahleinrichtung (35) ist.

12. Backwarenverwertungsanlage nach einem der Ansprüche 9 bis 11, bei welcher die Backwarenverwertungsvorrichtung (5) eine Misch- (55) und/oder eine Dosiereinrichtung (70) aufweist, die zum Zusetzen von Bindemittel zu den zerkleinerten Backwaren (50) ausgebildet ist bzw. sind.

13. Backwarenverwertungsanlage nach einem der Ansprüche 9 bis 12, bei welcher die Agglomerationseinrichtung (80) eine Pelletiereinrichtung (80) ist.

14. Backwarenverwertungsanlage nach einem der Ansprüche 9 bis 13, bei welcher die Backwarenverwertungsvorrichtung (5) eine Ausgabe aufweist, die zur Ausgabe der Brennstoffformlinge (85) ausgebildet ist und bei welcher Zuführungsmittel vorgesehen sind, mit welchen die Brennstoffformlinge (85) der Ausgabe zuführbar sind.

15. Backwarenverwertungsanlage nach einem der Ansprüche 9 bis 14, bei welcher die Backwarenverwertungsvorrichtung gekapselt ist.

16. Backwarenverwertungsanlage nach Anspruch 15, bei welcher die Backwarenverwertungsvorrichtung (5) zumindest einen Motor (110; 115) aufweist, der zum Antrieb der Zerkleinerungs- (35) bzw. Agglomerationseinrichtung (80) ausgebildet und außerhalb der Kapselung angeordnet ist.

17. Backwarenverwertungsanlage nach einem der Ansprüche 9 bis 16, bei welcher die Backwarenverwertungsvorrichtung zumindest einen Motor (110; 115) aufweist, der zum Antrieb der Zerkleinerungs- (35) bzw. Agglomerationseinrichtung (80) ausgebildet und oberhalb der Zerkleinerungs- (35) bzw. Agglomerationseinrichtung (80) angeordnet ist.

## Claims

1. A method for recycling bakery products (45) as a fuel, with which the bakery products are firstly dried, subsequently reduced in size and then agglomerated into fuel compacts (85).

2. A method according to claim 1, with which old bread is used as bakery products (45).

3. A method according to claim 1 or 2, with which the bakery products (45) are dried by way of the heat, in particular by way of the residual heat which is present after baking, of a baking oven.

4. A method according to claim 1, 2 or 3, with which the bakery products (45) are reduced in size by way of grinding.

5. A method according to one of the preceding claims, with which binding agent is added to the size-reduced bakery products (50) before the agglomeration into fuel compacts (85).

6. A method according to claim 5, with which binding agent in the form of sugar solution and/or glucose and/or sugar-containing bakery products is used.

7. A method according to one of the preceding claims, with which the size-reduced bakery products (50) are pelletised into fuel pellets (85).

8. A method according to one of the preceding claims, with which the fuel compacts (85) are combusted and at least a part of the thermal energy which is thereby released, is used for heating at least one baking oven.

9. A bakery product recycling installation with a bakery product recycling device (5) which comprises a size-reduction device (35), which is designed for the size-reduction of bakery products (45), as well as an agglomeration device (80), which is designed for the agglomeration of the size-reduced bakery products (50), as well as with at least one combustion device, which is designed for the combustion of fuel compacts (85), wherein the combustion device is designed for heating at least one baking oven, and the combustion device is preferably a part of the baking oven or is connected in a heat-conducting manner to the at least one baking oven.

10. A bakery product recycling installation according to claim 9, with which the bakery product recycling device (5) comprises a bakery product receiver (40) which is designed for receiving dried bakery products (45), and with which feed means are provided, with which the bakery products (45) may be fed from the bakery product receiver (40) to the size-reduction device (35).

11. A bakery product recycling device installation to claim 9 or 10, with which the size-reduction device (35) is a grinding device (35).

12. A bakery products recycling installation according to one of the claims 9 to 11, with which the bakery product recycling device (5) comprises a mixing device (55) and/or a dosing device (70), which is or are designed for adding binding agent to the size-reduced bakery products (50).

13. A bakery product recycling installation according to one of the claims 9 to 12, with which the agglomerisation device (80) is a pelletising device (80).

14. A bakery product recycling device according to one of the claims 9 to 13, with which the bakery product recycling device (5) comprises an output, which is designed for the outputting of the fuel compacts (85), and with which feed means are provided, with which the fuel compacts (85) may be fed to the output.

15. A bakery product recycling device according to one of the claims 9 to 14, with which the bakery product recycling device is encapsulated.

16. A bakery product recycling device according to claim 15, with which the bakery product recycling device (5) comprises at least one motor (110; 115), which is designed for the drive of the size-reduction device (35) and agglomeration device (80) respectively, and which is arranged outside the encapsulation.

17. A bakery product recycling device according to one of the claims 9 to 16, with which the bakery product recycling device comprises at least one motor (110; 115) which is designed for the drive of the size-reduction device (35) and agglomeration device (80) respectively, and is arranged above the size reduction device (35) and agglomeration device (80) respectively

## Revendications

1. Procédé de recyclage de produits de boulangerie (45) en tant que combustible, dans lequel les produits de boulangerie sont d'abord séchés, puis broyés et ensuite agglomérés en briquettes de combustible (85).

2. Procédé selon la revendication 1, dans lequel on utilise comme produit de boulangerie (45) du pain rassis.

3. Procédé selon la revendication 1 ou 2, dans lequel les produits de boulangerie (45) sont séchés par la chaleur d'un four à pain, en particulier par la chaleur résiduelle qui subsiste après la cuisson.

4. Procédé selon la revendication 1, 2 ou 3, dans lequel les produits de boulangerie (45) sont broyés par mouture.

5. Procédé selon l'une des revendications précédentes, dans lequel on ajoute un liant aux produits de boulangerie broyés (50) avant l'agglomération en briquettes de combustible (85).

6. Procédé selon la revendication 5, dans lequel le liant est utilisé sous la forme d'une solution de sucre et/ou de glucose et/ou de produits de boulangerie contenant du sucre.

7. Procédé selon l'une des revendications précédentes, dans lequel les produits de boulangerie broyés (50) sont transformés en pastilles de combustible (85).

8. Procédé selon l'une des revendications précédentes, dans lequel les briquettes de combustible (85) sont brûlées, et au moins une partie de l'énergie thermique alors libérée est exploitée pour le chauffage d'au moins un four de boulangerie.

9. Installation de recyclage des produits de boulangerie comportant un dispositif de recyclage des produits de boulangerie (5), qui comprend une unité de broyage (35) conçue pour broyer des produits de boulangerie (45), ainsi qu'une unité d'agglomération (80) destinée à agglomérer les produits de boulangerie broyés (50), ainsi que comportant au moins un dispositif de combustion qui est conçu pour brûler les briquettes de combustible (85), le dispositif de combustion étant conçu pour chauffer au moins un four de boulangerie et le dispositif de combustion étant de préférence une partie du four de boulangerie ou étant relié par conduction de chaleur au four de boulangerie, au moins au nombre de un.

10. Installation de recyclage des produits de boulangerie selon la revendication 9, dans laquelle le dispositif de recyclage des produits de boulangerie (5) présente une entrée pour les produits de boulangerie (40) qui est conçue pour recevoir des produits de boulangerie séchés (45), et dans laquelle sont prévus des moyens d'avance avec lesquels les produits de boulangerie (45) peuvent être amenés depuis l'entrée des produits de boulangerie (40) au dispositif de broyage (35).

11. Installation de recyclage des produits de boulangerie selon la revendication 9 ou 10, dans laquelle le dispositif de broyage (35) est un dispositif de mouture (35).

12. Installation de recyclage des produits de boulangerie selon l'une des revendications 9 à 11, dans laquelle le dispositif de recyclage des produits de boulangerie (5) présente un dispositif doseur (55) et/ou un dispositif mélangeur (70) conçu(s) pour ajouter du liant aux produits de boulangerie broyés (50).

13. Installation de recyclage des produits de boulangerie selon l'une des revendications 9 à 12, dans laquelle le dispositif d'agglomération (80) est un dispositif de fabrication de granulés (80).

14. Installation de recyclage des produits de boulangerie selon l'une des revendications 9 à 13, dans laquelle le dispositif de recyclage des produits de boulangerie (5) présente une sortie qui est conçue pour la sortie des briquettes de combustible (85) et dans laquelle sont prévus des moyens d'avance avec lesquels les briquettes de combustible (85) peuvent être amenées à la sortie.

15. Installation de recyclage des produits de boulangerie selon l'une des revendications 9 à 14, dans laquelle le dispositif de recyclage des produits de boulangerie est placé dans un carter.

16. Installation de recyclage des produits de boulangerie selon la revendication 15, dans laquelle le dispositif de recyclage des produits de boulangerie (5) présente au moins un moteur (110 ; 115), qui est conçu pour entraîner le dispositif de broyage (35) ou d'agglomération (80) et est disposé hors du carter.

17. Installation de recyclage des produits de boulangerie selon l'une des revendications 9 à 16, dans laquelle le dispositif de recyclage des produits de boulangerie présente au moins un moteur (110 ; 115), qui est conçu pour entraîner le dispositif de broyage (35) ou d'agglomération (80) et est disposé au-dessus du dispositif de broyage (35) ou d'agglomération (80).
